# EUROPÄISCHE PATENTSCHRIFT

(11) **EP 2 078 872 B1**
(45) Veröffentlichungstag und Bekanntmachung des Hinweises auf die Patenterteilung: **13.03.2019**
(21) Anmeldenummer: 08000188.6
(22) Anmeldetag: 08.01.2008
(51) Int. Cl.: F16C 17/22, F16C 33/04

(54) **LAGERANORDNUNG**
BEARING ARRANGEMENT
AGENCEMENT DE PALIER

(43) Veröffentlichungstag der Anmeldung: 15.07.2009
(73) Patentinhaber: Grundfos Management A/S, 8850 Bjerringbro (DK)
(72) Erfinder: Vedsted, Per Frost, 8850 Bjerringbro (DK); Poulsen, Brian Lundsted, 8870 Langaa (DK); Grann, Helge, 8850 Bjerringbro (DK)
(74) Vertreter: Hemmer, Arnd

(56) Entgegenhaltungen:
- EP-A- 0 492 605
- EP-A- 0 771 957
- DE-A1- 3 200 846
- DE-A1- 19 824 128
- NL-C1- 1 027 463

## Beschreibung

Die Erfindung betrifft eine Lageranordnung einer Welle, insbesondere eine Radiallageranordnung.

Beispielsweise aus EP 0 771 957 B1 ist eine Gleitlagerung für eine Maschinenwelle, in diesem Beispiel die Rotorwelle eines Pumpenaggregates, bekannt. Bei dieser Gleitlagerung ist eine Lagerbuchse auf die eigentliche Welle aufgesetzt.

Bei derartigen Lageranordnungen wird die Lagerbuchse aus einem geeigneten Lagermaterial, beispielsweise Bronze oder Keramik gefertigt, während die Rotorwelle üblicherweise ein herkömmliches Stahlbauteil ist. Um eine Drehmomentübertragung von der Rotorwelle auf die Lagerbuchse zu ermöglichen und die Lagerbuchse zu zentrieren, ist es bekannt, die Welle zu profilieren und in der Lagerbuchse korrespondierende Profilierungen auszubilden, welche mit der Welle formschlüssig in Eingriff treten.

Lagerbuchsen aus Keramik haben zwar den Vorteil, dass sie sehr verschleißfest sind, jedoch reagiert Keramik sehr empfindlich auf Zugspannungen. Problematisch ist, dass die Wärmeausdehnungskoeffizienten der Welle, welche aus Stahl gefertigt ist und der keramischen Lagerbuchse sehr unterschiedlich sind, was bei Erwärmung zu unerwünschten Zugspannungen in der Keramik und damit letztendlich zu Beschädigungen der keramischen Lagerbuchse führt.

DE 198 24 128 A1 offenbart ein radial-Gleitlager, welches ein hülsenförmiges Tragelement aufweist, auf dessen Außenumfang ein hülsenförmiges Lagerelement aufgesetzt ist. Am Innenumfang weist das Tragelement eine Ausnehmung auf, in welche eine Welle eingesetzt werden kann. Am Innenumfang der Ausnehmung sind darüber hinaus Aussparungen angeordnet, welche mit Federn, welche in die Oberfläche der Welle eingesetzt sind, zur Drehmomentübertragung in Eingriff treten.

Im Hinblick auf diese Problematik ist es Aufgabe der Erfindung, eine verbesserte Lageranordnung einer Welle, insbesondere einer Rotorwelle zu schaffen, bei welcher die in einer Lagerbuchse bzw. Lagerhülse auftretenden Spannungen verringert sind.

Diese Aufgabe wird durch eine Lageranordnung einer Welle mit den im Anspruch 1 angegebenen Merkmalen gelöst. Bevorzugte Ausführungsformen ergeben sich aus den Unteransprüchen, der nachfolgenden Beschreibung sowie den beigefügten Figuren.

Die erfindungsgemäße Lageranordnung eignet sich besonders bevorzugt als Radiallagerung für eine Rotorwelle, beispielsweise die Rotorwelle eines Pumpenaggregates. Die Lageranordnung weist eine ringförmige Lagerhülse aus einem geeigneten Lagermaterial, beispielsweise Keramik auf. Diese Lagerhülse ist auf die Welle aufgesetzt, sodass die Lagerhülse konzentrisch zur Drehachse der Welle angeordnet ist. Zur Drehmomentübertragung und zur Zentrierung der Lagerhülse auf der Welle ist die Welle zumindest in dem axialen Bereich, in dem die Lagerhülse angeordnet ist, mit einer Profilierung versehen. Diese Profilierung erstreckt sich parallel zur Längsachse der Welle, sodass es möglich ist, die Lagerhülse entlang der Profilierung in axialer Richtung auf die Welle aufzuschieben. Die Lagerhülse weist zumindest ein korrespondierendes Eingriffselement am Innenumfang auf. Besonders bevorzugt ist der Innenumfang der Lagerhülse korrespondierend zum Außenumfang der Welle profiliert. Auf diese Weise kann die Lagerhülse mittels ihres Eingriffselementes formschlüssig mit der Profilierung der Welle in Eingriff treten, um die umfängliche Befestigung und Zentrierung der Lagerhülse auf der Welle zu bewirken.

Erfindungsgemäß ist nun das Eingriffselement am Innenumfang der Lagerhülse so ausgestaltet, dass es sich in Richtung der Längsachse der Welle nur über einen Teil der Länge der Lagerhülse erstreckt. Auf diese Weise können in den Bereichen der Lagerhülse, in denen kein Eingriffselement ausgebildet ist, die von außen auf die Lagerhülse wirkenden Spannungen reduziert werden. Dies sind insbesondere die Außenbereiche der Lagerhülse, in welchen die Lagerhülse mit angrenzenden Bauteilen zur axialen Fixierung der Lagerhülse auf der Welle in Anlage kommt. Insbesondere können so von den angrenzenden Bauteilen keine Kräfte direkt auf die Eingriffselemente wirken, sodass diese nicht beschädigt werden können.

Bevorzugt ist somit das zumindest eine Eingriffselement in Richtung der Längsachse von den Axialenden der Lagerhülse beabstandet. D.h., an den an die axialen Stirnflächen bzw. -kanten angrenzenden Bereichen der Lagerhülse sind keine Eingriffselemente ausgebildet, sodass insbesondere in diesen Bereichen auftretenden Spannungen im Inneren der Lagerhülse verringert bzw. eliminiert werden können. Diese Bereiche sind besonders empfindlich, da diese üblicherweise mit Stahlmuffen bzw. -hülsen zur Anlage kommen, welche die Lagerhülse in axialer Richtung auf der Welle fixieren und an den axialen Stirnflächen der Lagerhülse anliegen.

Die an die Axialenden der Lagerhülse angrenzenden Bereiche der Lagerhülse sind diejenigen Bereiche, in welchen die größten Spannungen und/oder Verformungen bei Einwirkung von äußeren Kräften, insbesondere von Radialkräften auftreten. Durch die erfindungsgemäße Anordnung der Eingriffselemente wird erreicht, dass in diesen Bereichen keine Eingriffselemente ausgebildet sind, sodass diese in diesen Bereichen nicht beschädigt werden können. Insbesondere ist in diesen Bereichen die Gefahr von Brüchen aufgrund der Kerbwirkung im Übergang zu den Eingriffselementen reduziert.

Weiter bevorzugt erstreckt sich das zumindest eine Eingriffselement in Richtung der Längsachse über weniger als 50% der Länge der Lagerhülse. So wird derjenige Bereich der Lagerhülse, welcher über die Eingriffselemente formschlüssig mit der Profilierung der Welle in Eingriff ist, verringert, sodass auch die Bereiche der Lagerhülse, welche den von der Verbindung mit der Welle übertragenen Kräften ausgesetzt sind, minimiert werden.

Weiter bevorzugt ist das zumindest eine Eingriffselement in Richtung der Längsachse bezüglich der Mitte der Lagerhülse zentriert. D.h., das eine Eingriffselement oder die mehreren Eingriffselemente sind von den beiden axialen Stirnenden der Lagerhülse gleich weit beabstandet. Auf diese Weise wird ein symmetrischer Aufbau der Lagerhülse erreicht, bei welchen an beiden axialen Stirnseiten der Lagerhülse die auftretenden Spannungen in gleicher Weise verringert werden können.

Besonders bevorzugt sind am Innenumfang der Lagerhülse mehrere Eingriffselemente angeordnet, wobei die Eingriffselemente vorzugsweise gleichmäßig über den Innenumfang verteilt sind. Auf diese Weise eignen sich die Eingriffselemente besonders zur Zentrierung der Lagerhülse auf der Welle und ermöglichen eine gleichmäßige Krafteinleitung bzw. -übertragung von der Welle zu der Lagerhülse.

Besonders bevorzugt sind die Profilierung der Welle und das zumindest eine Eingriffselement als miteinander korrespondierende Profilierungen, insbesondere Keilprofile ausgebildet. Ein solches Keilprofil ermöglicht eine gute Zentrierung der Lagerhülse auf der Welle.

Gemäß einer weiteren bevorzugten Ausführung der Erfindung kann die Profilierung der Welle in Form eines polygonalen Querschnitts der Welle ausgebildet sein und das zumindest eine Eingriffselement definiert vorzugsweise einen entsprechenden polygonalen Innenquerschnitt der Lagerhülse. Die korrespondierende bzw. passende Ausgestaltung des Innenquerschnitts der Lagerhülse zum Außenquerschnitt der Welle ermöglicht eine in radialer Richtung spielfreie Anordnung der Lagerhülse auf der Welle, sodass die Lagerhülse auf der Welle durch die Profilierung zentriert werden kann.

Wie oben ausgeführt ist die Lagerhülse besonders bevorzugt aus Keramik gefertigt. Keramik ist ein besonders verschleißfestes Lagermaterial, welches eine lange Haltbarkeit der Lageranordnung sicherstellt.

Wie bereits oben erwähnt, liegt die Lagerhülse zur axialen Fixierung mit zumindest einem Axialende an einer auf die Welle aufgesetzten Haltemuffe bzw. Haltehülse an. Die Haltehülse ist in axialer Richtung auf der Welle fixiert und hält so die Lagerhülse in axialer Richtung. Dabei liegen die Lagerhülse und die Haltehülse mit ihren axialen Stirnseiten aneinander an. Die Haltehülse kann sich über ein Federelement in axialer Richtung an der Welle abstützen, sodass eine Ausdehnung aufgrund Erwärmung in axialer Richtung ausgeglichen werden kann und dennoch die Lagerhülse sicher in axialer Richtung gehalten werden kann.

Da die Lagerhülse und die Haltehülse bevorzugt aus unterschiedlichen Materialen gefertigt werden, ergibt es sich, dass Lagerhülse und Haltehülse unterschiedliche thermische Ausdehnungskoeffizienten haben. Wie beschrieben kann die Lagerhülse bevorzugt aus Keramik gefertigt sein, während die Haltehülse bevorzugt aus Stahl gefertigt ist. Diese unterschiedlichen thermischen Ausdehnungskoeffizienten führen dazu, dass von der Haltehülse auf die Lagerhülse im Anlagebereich Radialkräfte übertragen werden, welche zur Spannungen im Material der Lagerhülse führen. Um die Spannungen gerade in diesen Anlagebereichen, in welchen die Lagerhülse mit den Haltehülsen in Kontakt ist, zu verringern, ist es bevorzugt, die Eingriffselemente am Innenumfang der Lagerhülse in der oben beschriebenen Weise auszubilden. Bevorzugt sind die Eingriffselemente von den Axialenden der Lagerhülse in axialer Richtung so weit beabstandet bzw. zurückversetzt, dass sie eben nicht mit den Haltehülsen in Kontakt kommen. Auf diese Weise werden von den Haltehülsen keine äußeren Kräfte auf die Eingriffselemente in radialer Richtung übertragen, sodass hier keine unerwünschten Spannungen in den Eingriffselementen bzw. dem Profil zur Zentrierung der Lagerhülse auf der Welle hervorgerufen werden. Auf diese Weise wird die Gefahr von Beschädigungen der Lagerhülse, insbesondere deren Eingriffselemente bzw. Profilierung aufgrund äußere Kräfte verringert.

Die zumindest eine Haltehülse ist dabei bevorzugt so ausgebildet, dass sie an zumindest einem Axialende, d.h. demjenigen Axialende, mit welchem sie an der Lagerhülse zur Anlage kommt, eine größere Wandstärke als in ihrem axialen Mittelbereich aufweist. Dies ermöglicht es, dass an dem Axialende mit größerer Wandstärke eine ausreichend große Anlagefläche zur Anlage an der Lagerhülse sichergestellt werden kann. Gleichzeitig wird in den übrigen Bereichen der Haltehülse, welche eine geringere Wandstärke aufweisen, eine größere Elastizität bzw. Federwirkung der Haltehülse erreicht. So können bei Erwärmung auftretende Größenänderungen von der Haltehülse selber aufgrund ihrer Elastizität bzw. Federwirkung aufgenommen werden. Dadurch werden die auf die Lagerhülse übertragenen Radialkräfte, welche aufgrund Materialausdehnung bei Erwärmung auftreten können, reduziert.

Bevorzugt weist die Haltehülse an ihren beiden axialen Enden eine größere Wandstärke auf als in ihrem dazwischenliegenden axialen Mittelbereich. Auf diese Weise werden die Axialenden, welche zur Anlage an weiteren Bauteilen vorgesehen sind, mit möglichst großen Anlageflächen versehen. Der dazwischenliegende Mittelbereich ist dünner bzw. ausgedünnt ausgebildet, um in diesem Bereich die gewünschte Elastizität bzw. Federwirkung zu erreichen. Die Haltehülse liegt mit einem Axialende an der Lagerhülse an. Mit dem entgegensetzten Axialende liegt sie an einem Sicherungselement, beispielsweise einem Feder- oder Sicherungsring an, über welchen sich die Haltehülse in axialer Richtung auf der Welle abstützt.

Weiter bevorzugt hat die Haltehülse an zumindest einem Axialende einen radial nach innen und/oder radial nach außen gerichteten umfänglichen Kragen. So entstehen eine größere Wandstärke bzw. in radialer Richtung breitere axiale Stirnflächen, welche die Anlageflächen bilden, mit welchen die Haltehülse an der Lagerhülse oder einem Sicherungselement anliegt.

Die Haltehülse ist vorzugsweise aus Metall, beispielsweise Stahl oder aber Titan gefertigt. Die Ausbildung aus Titan hat den Vorteil, dass die Ausdehnung bei Erwärmung verringert werden kann, da Titan einen geringeren Wärmeausdehnungskoeffizienten als Stahl aufweist. Hierdurch wird der Unterschied in der Größenänderung bei Erwärmung zwischen einer keramischen Lagerhülse und der Haltehülse verringert, wodurch auch die auftretenden Kräfte und Spannungen in den Bauteilen verringert werden können.

Nachfolgend wird die Erfindung beispielhaft anhand der beigefügten Figuren beschrieben. In diesen zeigt:
- Fig. 1: in einer schematischen Schnittansicht den grundsätzlichen Aufbau einer Lageranordnung, von welcher die vorliegende Erfindung ausgeht,
- Fig. 2: eine schematische perspektivische Ansicht einer Lagerhülse gemäß der Erfindung,
- Fig. 3a - 3c: schematische Schnittansichten einer Haltehülse in drei verschiedenen Ausführungsformen,
- Fig. 4a - 4c: Schnittansichten drei weiterer Ausführungsformen einer Haltehülse,
- Fig. 5a: eine perspektivische Ansicht einer Lagerhülse mit daran angeordneten Haltehülsen,
- Fig. 5b: eine Draufsicht auf die Anordnung gemäß Fig. 5a und
- Fig. 6a - 6d: vier verschiedene mögliche Wellenprofile.

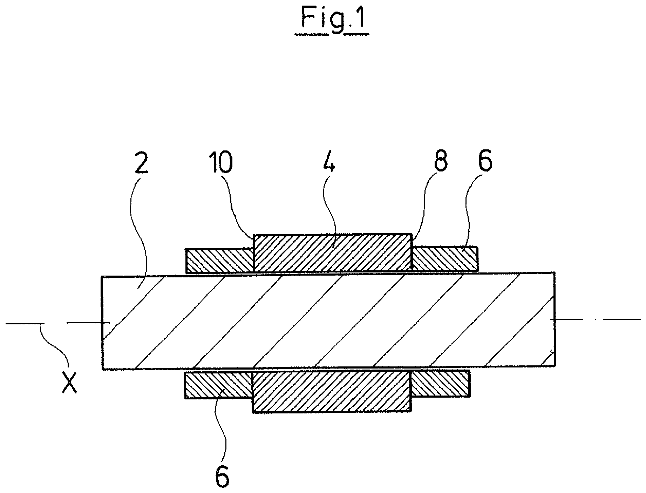

Fig. 1 zeigt schematisch eine Lageranordnung einer Welle, wie sie aus dem Stand der Technik bekannt ist und von welcher die vorliegende Erfindung ausgeht. Bei dieser Lageranordnung ist an der Welle 2 eine keramische Lagerhülse 4 angeordnet. Die Lagerhülse 4 umgibt die Welle 2 ringförmig und ist konzentrisch zu deren Längsachse X ausgerichtet bzw. zentriert. Hierzu ist die Lagerhülse 4 mit der Welle 2 über ein hier nicht näher gezeigtes Profil formschlüssig in Eingriff. In axialer Richtung ist die Lagerhülse 4 an der Welle 2 über zwei Haltehülsen 6 fixiert, welche sich beispielsweise an Sicherungsringen (hier nicht gezeigt) in axialer Richtung auf der Welle 2 abstützen. Dabei kann sich zumindest eine der Haltehülsen 6 in axialer Richtung über ein Federelement an der Welle 2 abstützen, um bei Temperaturänderungen daraus resultierende Längenänderungen der Haltehülsen 6 und ggf. der Lagerhülse 4 ausgleichen zu können. Wie in Fig. 1 schematisch gezeigt, liegt zur axialen Fixierung die Lagerhülse 4 mit ihren axialen Stirnseiten 8, 10 an jeweils einer Haltehülse 6 an. Die axialen Endbereiche der Lagerhülse 4, welche an den Haltehülsen 6 anliegen, sind aufgrund unterschiedlicher thermischer Ausdehnungskoeffizienten zwischen Lagerhülse 4 und Haltehülse 6 besonderen Spannungen ausgesetzt und daher besonders verschleißgefährdet. Die Haltehülsen 6 sind üblicherweise aus Stahl oder einem anderen geeigneten Material gefertigt.

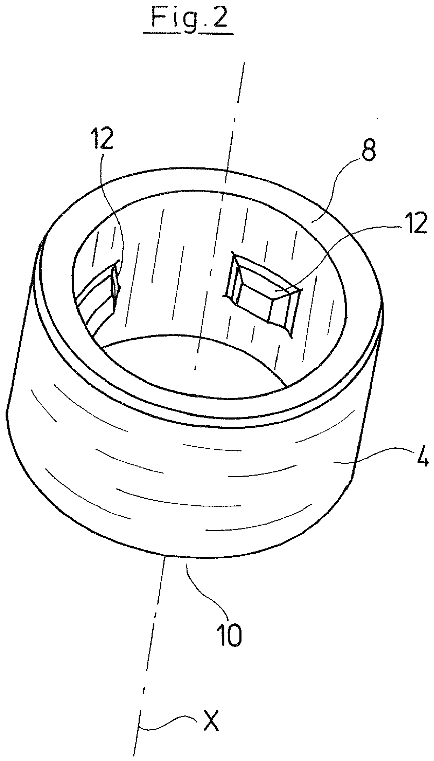

Fig. 2 zeigt eine schematische Ausführungsform einer erfindungsgemäßen Lagerhülse. Diese Lagerhülse 4 weist an ihrem Innenumfang Eingriffselemente 12 auf. Diese Eingriffselemente 12 sind in diesem Beispiel keilförmig ausgebildet. Wesentlich ist, dass sie korrespondierend zu einer Profilierung an der Welle 2 ausgebildet sind, um mit dieser formschlüssig in Eingriff treten zu können, um die Lagerhülse 4 an der Welle 2 zu zentrieren und eine Drehmomentübertragung zwischen Welle 2 und Lagerhülse 4 zu ermöglichen. Die Eingriffselemente 12 sind so ausgebildet, dass sie in Richtung der Längsachse X einen gleichbleibenden Querschnitt aufweisen, sodass es möglich ist, die Lagerhülse 4 in axialer Richtung in einer entsprechenden Profilierung an der Welle 2 zu verschieben. Wesentlich ist, dass die Eingriffselemente 12 sich nicht über die gesamte axiale Länge in Richtung der Längsachse X der Lagerhülse 4 erstrecken. Im gezeigten Beispiel sind sie in axialer Richtung lediglich im Mittelbereich ausgebildet, sodass die Axialenden der Eingriffselemente 12 von den Stirnseiten 8 und 10 der Lagerhülse 4 beabstandet sind. Auf diese Weise wird sichergestellt, dass von den angrenzenden Haltehülsen 6 keine Radialkräfte auf die Eingriffselemente 12 übertragen werden können. So wird verhindert, dass die von den Haltehülsen 6 übertragenen Radialkräfte unerwünschte Spannungen in den Eingriffselementen 12, welche zu deren Beschädigung führen könnten, hervorrufen.

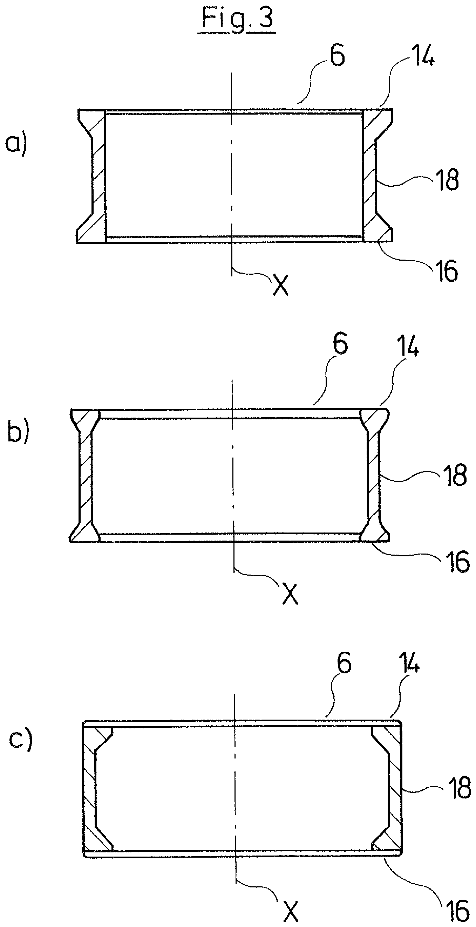

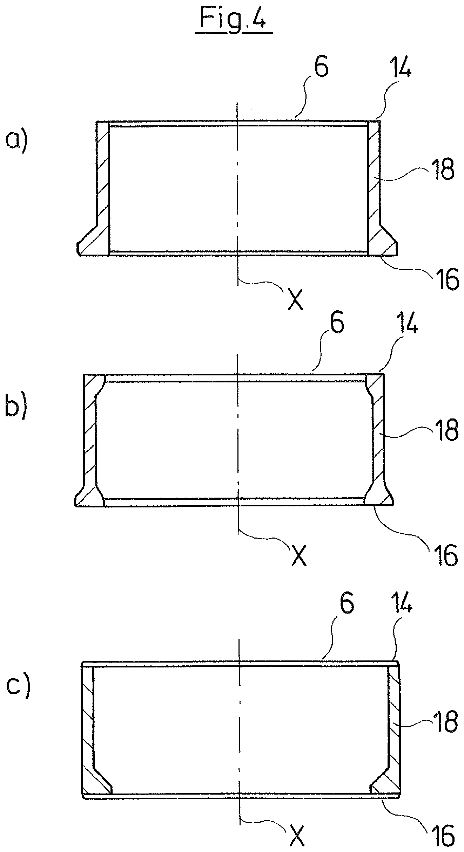

Anhand der Figuren 3 und 4 wird die bevorzugte Ausgestaltung der Haltehülsen 6 näher beschrieben. Die in den Figuren 3a bis 3c und 4a bis 4c gezeigten Haltehülsen sind sämtlich so ausgebildet, dass sie über ihre axiale Länge in Richtung der Längsachse X keine konstante Wandstärke aufweisen. So sind die Haltehülsen gemäß Fig. 3a bis 3c jeweils an ihren axialen Enden 14, 16 in radialer Richtung verdickt ausgebildet. In dem dazwischenliegenden Mittelbereich 18 ist die Wandstärke ausgedünnt bzw. geringer ausgebildet. Dies ist bei der Ausführungsform gemäß Fig. 3a dadurch erreicht, dass die Wandung der Haltehülse 6 an den axialen Enden 14 und 16 radial nach außen verdickt ist, d.h. eine umfängliche radial nach außen gerichtete Auskragung bzw. Schulter aufweist. Bei der Ausführungsform gemäß 3b erstreckt sich die Verdickung an den axialen Enden 14 und 16 sowohl radial nach außen als auch radial nach innen. Bei der Ausführungsform gemäß Fig. 3c ist die Verdickung der Umfangswandung der Haltehülse 6 lediglich durch radial nach innen gerichtete Verdickungen bzw. Auskragungen an den axialen Enden 14 und 16 ausgebildet. Durch die Verdickungen an den axialen Enden 14 und 16 werden dort stirnseitig vergrößerte Anlageflächen geschaffen, mit welchen die Haltehülse beispielsweise mit den axialen Stirnseiten 8, 10 der Lagerhülse 4 zur Anlage kommt. So kann die Haltehülse 6 an den axialen Enden 14 und 16 eine Wandstärke aufweisen, welche herkömmlichen Haltehülsen entspricht. Der ausgedünnte Mittelbereich 18 bewirkt eine vergrößerte Elastizität bzw. Federwirkung der Haltehülse 6, welche einen Ausgleich der Materialausdehnung bei Erwärmung ermöglicht. Auf diese Weise werden bei dieser Haltehülse die radiale Ausdehnung an den axialen Stirnseiten 14 und 16 und somit die dort auf die anliegende Lagerhülse 4 übertragenden Radialkräfte verringert.

Die Ausführungsformen gemäß Fig. 4a bis 4c entsprechen grundsätzlich den Ausführungsformen, wie sie anhand von Fig. 3a bis 3c erläutert wurden, mit dem Unterschied, dass bei den Ausführungsformen gemäß Fig. 4 nur das eine axialen Ende 16 die beschriebenen Verdickungen aufweist. D.h., die axialen Enden 14 entsprechen in ihrer Wandstärke, dem Mittelbereich 18. Lediglich bei dem Ausführungsbeispiels gemäß Fig. 4b besteht auch an dem axialen Ende 14 eine radial nach innen gerichtete Verdickung bzw. ein radial nach innen gerichteter Kragen. Dort ist jedoch kein radial nach außen gerichteter Kragen wie an dem Axialende 16 vorgesehen.

Es ist zu verstehen, dass alle Haltehülsen 6 gemäß Figuren 3 und 4 in ihrem Inneren Eingriffselemente bzw. eine Profilierung aufweisen können, welche hier nicht gezeigt ist und dazu dient, mit einer korrespondierenden Profilierung am Außenumfang der Welle 2 formschlüssig in Eingriff zu treten.

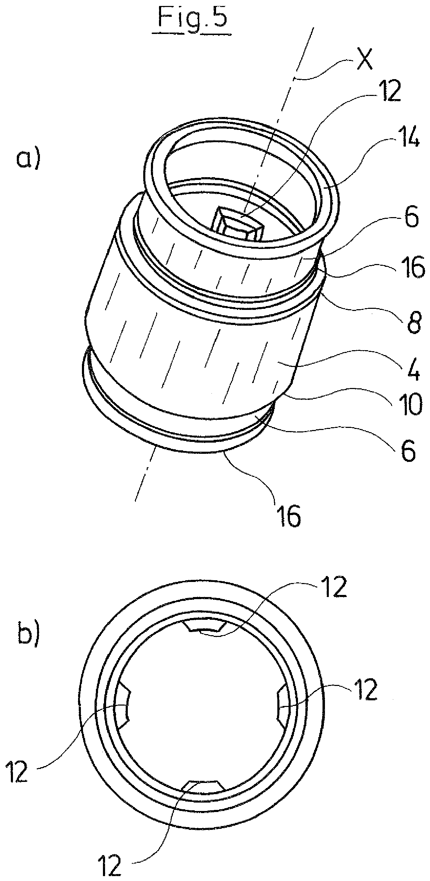

Fig. 5 zeigt die Anordnung einer Lagerhülse 4 mit zwei daran anliegenden Haltehülsen 6 gemäß der vorangehenden Beschreibung. Dabei ist zu erkennen, dass eine erste Haltehülse 6 mit ihrem axialen Ende 16 an der axialen Stirnseite 8 der Lagerhülse 4 anliegt, während eine zweite Lagerhülse 6 mit ihrem axialen Ende 14 an der entgegengesetzten Stirnseite 10 der Lagerhülse 4 anliegt. D.h. die Lagerhülse 4 ist in axialer Richtung X zwischen den beiden Haltehülsen 6 eingeklemmt.

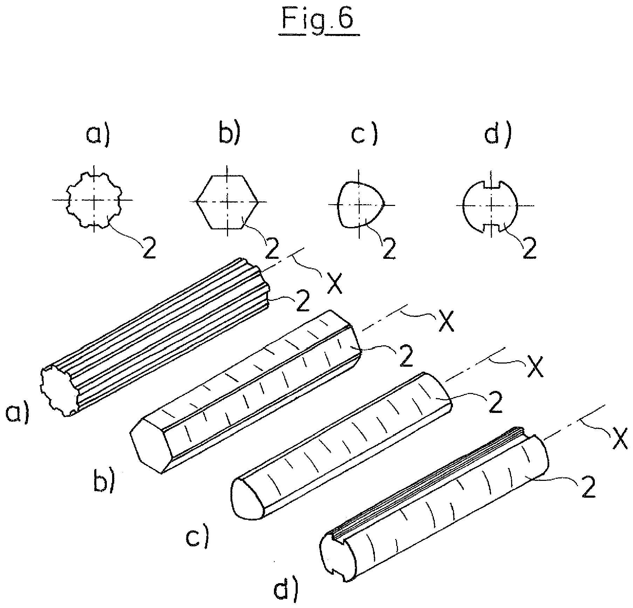

Figur 6 zeigt verschiedene Profile des Außenumfangs der Welle, wobei zu verstehen ist, dass die Eingriffselemente bzw. Profile am Innenumfang der Lagerhülse 4 sowie der Haltehülsen 6 immer entsprechend korrespondierend ausgebildet werden, sodass diese mit der Welle 2 formschlüssig in Eingriff treten können. Bei dem Profil gemäß Fig. 6a sind sich in Längsrichtung erstreckende Vorsprünge und Nuten abwechselnd in der Wellenoberfläche ausgebildet. Bei der Welle gemäß Fig. 6d, weist die Welle einen sechseckigen Querschnitt auf. Die Welle 2 gemäß Fig. 6c weist einen dreieckigen Querschnitt mit konvexen Seitenflächen auf. Der Querschnitt der Welle 2 gemäß Fig. 6d weist zwei an diametral entgegengesetzten Umfangsseiten gelegene sich parallel zur Längsachse X erstreckenden Nuten auf, in welche Eingriffselemente 12 am Innenumfang der Lagerhülse 4 sowie entsprechende Eingriffselemente am Innenumfang der Haltehülse eingreifen können.

Grundsätzlich ist zu verstehen, dass das Profil der Welle in vielfältiger anderer Weise ausgebildet werden kann, wobei dann die korrespondierenden Eingriffselemente am Innenumfang der Lagerhülse 4 sowie der Haltehülsen 6 entsprechend ausgebildet werden.

### Bezugszeichenliste

- 2: - Welle
- 4: - Lagerhülse
- 6: - Haltehülse
- 8, 10: - Axiale Stirnseiten
- 12: - Eingriffselemte
- 14, 16: - Axiale Enden
- 18: - Mittelbereich

- X: - Längsachse

## Patentansprüche

1. Lageranordnung einer Welle (2), bei welcher eine ringförmige Lagerhülse (4) aus einem Lagermaterial auf die Welle (2) aufgesetzt ist, **dadurch gekennzeichnet, dass** die Welle (2) zumindest in dem axialen Bereich, in dem die Lagerhülse (4) angeordnet ist, eine sich parallel zu ihrer Längsachse (X) erstreckende Profilierung aufweist, welche es ermöglicht, die Lagerhülse (4) entlang der Profilierung in axialer Richtung auf die Welle (2) aufzuschieben, und in welche zumindest ein korrespondierendes Eingriffselement (12) am Innenumfang der Lagerhülse (4) formschlüssig eingreift, wobei
sich das zumindest eine Eingriffselement (12) in Richtung der Längsachse (X) der Welle (2) nur über einen Teil der Länge der Lagerhülse (4) erstreckt und die Lagerhülse (4) zur axialen Fixierung mit zumindest einem Axialende (8, 10) an einer auf die Welle (2) aufgesetzten Haltehülse (6) anliegt.

2. Lageranordnung nach Anspruch 1, **dadurch gekennzeichnet, dass** das zumindest eine Eingriffselement (12) in Richtung der Längsachse (X) von den Axialenden (8, 10) der Lagerhülse (4) beabstandet ist.

3. Lageranordnung nach Anspruch 1 oder 2, **dadurch gekennzeichnet, dass** sich das zumindest eine Eingriffselement (12) in Richtung der Längsachse (X) über weniger als 50% der Länge der Lagerhülse (4) erstreckt.

4. Lageranordnung nach einem der vorangehenden Ansprüche, **dadurch gekennzeichnet, dass** das zumindest eine Eingriffselement (12) in Richtung der Längsachse (X) bezüglich der Mitte der Lagerhülse (4) zentriert ist.

5. Lageranordnung nach einem der vorangehenden Ansprüche, **dadurch gekennzeichnet, dass** am Innenumfang der Lagerhülse (4) mehrere Eingriffselemente (12) angeordnet sind, wobei die Eingriffselemente (12) vorzugsweise gleichmäßig über den Innenumfang verteilt sind.

6. Lageranordnung nach einem der vorangehenden Ansprüche, **dadurch gekennzeichnet, dass** die Profilierung der Welle (2) und das zumindest eine Eingriffselement (12) als miteinander korrespondierende Keilprofile ausgebildet sind.

7. Lageranordnung nach einem der Ansprüche 1 bis 5, **dadurch gekennzeichnet, dass** die Profilierung der Welle (2) in Form eines polygonalen Querschnittes der Welle (2) ausgebildet ist und das zumindest eine Eingriffselement (12) vorzugsweise einen entsprechenden polygonalen Innenquerschnitt der Lagerhülse (4) definiert.

8. Lageranordnung nach einem der vorangehenden Ansprüche, **dadurch gekennzeichnet, dass** die Lagerhülse (4) aus Keramik gefertigt ist.

9. Lageranordnung nach einem der vorangehenden Ansprüche, bei welcher beide Axialenden (8, 10) der Lagerhülse (4) an jeweils einer auf der Welle (2) angeordneten Haltehülse (6) anliegen.

10. Lageranordnung nach einem der vorangehenden Ansprüche, **dadurch gekennzeichnet, dass** die Haltehülse (6) an zumindest einen Axialende (8, 10) eine größere Wandstärke als in ihrem axialen Mittelbereich (18) aufweist.

11. Lageranordnung nach Anspruch 10, **dadurch gekennzeichnet, dass** die Haltehülse (6) an ihren beiden axialen Enden (14, 16) eine größere Wandstärke als in ihrem dazwischenliegenden axialen Mittelbereich (18) aufweist.

12. Lageranordnung nach Anspruch 10 oder 11, **dadurch gekennzeichnet, dass** die Haltehülse (6) an zumindest einem Axialende (14, 16) einen radial nach innen und/oder radial nach außen gerichteten umfänglichen Kragen aufweist.

13. Lageranordnung nach einem der vorangehenden Ansprüche, **dadurch gekennzeichnet, dass** die Haltehülse (6) aus Metall, vorzugsweise Stahl oder Titan gefertigt ist.

## Claims

1. A bearing arrangement of a shaft (2), with which an annular bearing sleeve (4) is applied from a bearing material onto the shaft (2), **characterised in that** the shaft (2) at least in the axial region in which the bearing sleeve (4) is arranged, comprises a profiling extending parallel to its longitudinal axis (X), which allows to push the bearing sleeve (4) in axial direction along the profiling onto the shaft (2) and into which at least one corresponding engagement element (12) on the inner periphery of the bearing element (4) engages with a positive fit,
wherein
the at least one engagement element (12) extends in the direction of the longitudinal axis (X) of the shaft (2) only over a part of the length of the bearing sleeve (4) and the bearing sleeve (4) for axial fixation, bears with at least one axial end (8, 10) on a retaining sleeve (6) applied onto the shaft (2).

2. A bearing arrangement according to claim 1, **characterised in that** the at least one engagement element (12) is distanced to the axial ends (8, 10) of the bearing sleeve (4) in the direction of the longitudinal axis (X).

3. A bearing arrangement according to claim 1 or 2, **characterised in that** the at least one engagement element (12) extends in the direction of the longitudinal axis (X) over less than 50% of the length of the bearing sleeve (4).

4. A bearing arrangement according to one of the preceding claims, **characterised in that** the at least one engagement element (12) is centred in the direction of the longitudinal axis (X) with respect to the middle of the bearing sleeve (4).

5. A bearing arrangement according to one of the preceding claims, **characterised in that** several engagement elements (12) are arranged on the inner periphery of the bearing sleeve (4), wherein the engagement elements (12) are preferably uniformly distributed over the inner periphery.

6. A bearing arrangement according to one of the preceding claims, **characterised in that** the profiling of the shaft (2) and the at least one engagement element (12) are designed as wedge profilings corresponding with one another.

7. A bearing arrangement according to one of the claims 1 to 5, **characterised in that** the profiling of the shaft (2) is designed in the form of a polygonal cross section of the shaft (2), and the at least one engagement element (12) preferably defines a corresponding polygonal inner cross section of the bearing sleeve (4).

8. A bearing arrangement according to one of the preceding claims, **characterised in that** the bearing sleeve (4) is manufactured of ceramic.

9. A bearing arrangement according to one of the preceding claims, with which both axial ends (8, 10) of the bearing sleeve (4) bear in each case on a retaining sleeve (6) arranged on the shaft (2).

10. A bearing arrangement according to one of the preceding claims, **characterised in that** the retaining sleeve (6) at least at one axial end (8, 10) has a greater wall thickness than in its axial middle region (18).

11. A bearing arrangement according to claim 10, **characterised in that** the retaining sleeve (6) at its two axial ends (14, 16) has a greater wall thickness than in its axial middle region (18) lying therebetween.

12. A bearing arrangement according to claim 10 or 11, **characterised in that** the retaining sleeve (6) at least at one axial end (14, 16) comprises a radially inwardly and/or radially outwardly directed, peripheral collar.

13. A bearing arrangement according to one of the preceding claims, **characterised in that** the retaining sleeve (6) is manufactured of metal, preferably steel or titanium.

## Revendications

1. Agencement de palier d'un arbre (2), dans lequel un coussinet de palier (4) annulaire composé d'un matériau antifriction est appliqué sur l'arbre (2), **caractérisé en ce que** l'arbre (2) présente, au moins dans la région axiale dans laquelle est disposé le coussinet de palier (4), un profilage s'étendant parallèlement à son axe longitudinal (X), qui permet d'enfiler le coussinet de palier (4) sur l'arbre (2) le long du profilage en direction axiale, et dans lequel s'engage par complémentarité de forme au moins un élément d'engagement (12) correspondant sur le pourtour intérieur du coussinet de palier (4), l'élément d'engagement (12), au moins au nombre de un, s'étendant uniquement sur une partie de la longueur du coussinet de palier (4) dans la direction de l'axe longitudinal (X) de l'arbre (2), et le coussinet de palier (4) reposant, pour la fixation axiale, par au moins une extrémité axiale (8, 10) contre un manchon de retenue (6) positionné sur l'arbre (2).

2. Agencement de palier selon la revendication 1, **caractérisé en ce que** l'élément d'engagement (12), au moins au nombre de un, est espacé, dans la direction de l'axe longitudinal (X), des extrémités axiales (8, 10) du coussinet de palier (4).

3. Agencement de palier selon la revendication 1 ou 2, **caractérisé en ce que** l'élément d'engagement (12), au moins au nombre de un, s'étend, dans la direction de l'axe longitudinal (X), sur moins de 50 % de la longueur du coussinet de palier (4).

4. Agencement de palier selon l'une des revendications précédentes, **caractérisé en ce que** l'élément d'engagement (12), au moins au nombre de un, est centré, dans la direction de l'axe longitudinal (X), par rapport au centre du coussinet de palier (4).

5. Agencement de palier selon l'une des revendications précédentes, **caractérisé en ce que** plusieurs éléments d'engagement (12) sont disposés sur le pourtour intérieur du coussinet de palier (4), les éléments d'engagement (12) étant répartis de préférence régulièrement sur le pourtour intérieur.

6. Agencement de palier selon l'une des revendications précédentes, **caractérisé en ce que** le profilage de l'arbre (2) et l'élément d'engagement (12), au moins au nombre de un, sont réalisés sous la forme de profils cannelés correspondant entre eux.

7. Agencement de palier selon l'une des revendications 1 à 5, **caractérisé en ce que** le profilage de l'arbre (2) est réalisé sous la forme d'une section transversale polygonale de l'arbre (2) et **en ce que** l'élément d'engagement (12), au moins au nombre de un, définit de préférence une section transversale intérieure polygonale correspondante du coussinet de palier (4).

8. Agencement de palier selon l'une des revendications précédentes, **caractérisé en ce que** le coussinet de palier (4) est fabriqué en céramique.

9. Agencement de palier selon l'une des revendications précédentes, dans lequel les deux extrémités axiales (8, 10) du coussinet de palier (4) reposent respectivement sur un manchon de retenue (6) disposé sur l'arbre (2).

10. Agencement de palier selon l'une des revendications précédentes, **caractérisé en ce que** le manchon de retenue (6) présente, au niveau d'au moins une extrémité axiale (8, 10), une plus grande épaisseur de paroi que dans sa région médiane axiale (18).

11. Agencement de palier selon la revendication 10, **caractérisé en ce que** le manchon de retenue (6) présente, au niveau de ses deux extrémités axiales (14, 16), une plus grande épaisseur de paroi que dans sa région médiane axiale (18) intermédiaire.

12. Agencement de palier selon la revendication 10 ou 11, **caractérisé en ce que** le manchon de retenue (6) présente, au niveau d'au moins une extrémité axiale (14, 16), une collerette périphérique radialement orientée vers l'intérieur et/ou radialement orientée vers l'extérieur.

13. Agencement de palier selon l'une des revendications précédentes, **caractérisé en ce que** le manchon de retenue (6) est fabriqué en métal, de préférence en acier ou en titane.
